# EUROPÄISCHE PATENTSCHRIFT

(11) **EP 3 106 368 B1**
(45) Veröffentlichungstag und Bekanntmachung des Hinweises auf die Patenterteilung: **05.09.2018**
(21) Anmeldenummer: 16163641.0
(22) Anmeldetag: 04.04.2016
(51) Int. Cl.: B62D 11/24

(54) **LANDWIRTSCHAFTLICHES FAHRZEUG**
AGRICULTURAL VEHICLE
VEHICULE AGRICOLE

(30) Priorität: 16.06.2015 DE 102015109610
(43) Veröffentlichungstag der Anmeldung: 21.12.2016
(73) Patentinhaber: CLAAS Selbstfahrende Erntemaschinen GmbH, 33428 Harsewinkel (DE)
(72) Erfinder: Fischer, Frédéric, 59823 Arnsberg (DE); Dückingaus, Heinrich, 33649 Bielefeld (DE); Renger, Hermann, Sander Str. 43 Delbrück (DE)

(56) Entgegenhaltungen:
- EP-A2- 2 930 086
- DE-A1- 10 138 563
- US-A1- 2002 014 060

## Beschreibung

Die Erfindung betrifft ein landwirtschaftliches Fahrzeug, insbesondere ein Raupenfahrzeug, mit den Merkmalen des Oberbegriffs von Anspruch 1.

Der Manövrierbarkeit landwirtschaftlicher Fahrzeuge kommt große Bedeutung zu. Dies betrifft insbesondere selbstfahrende Erntemaschinen wie Mähdrescher oder Feldhäcksler, bei denen eine unzureichende Manövrierbarkeit zu Einbußen im Ernteertrag kommen kann. Wesentlich dabei ist ein möglichst geringer Wenderadius sowie ein gutes Ansprechverhalten des Lenksystems bei sich verändernden Lenkwinkeln eines Lenkrades o. dgl.. Vor diesem Hintergrund ist es bekannt geworden, das Lenksystem des landwirtschaftlichen Fahrzeugs mit einer hydrostatischen Lenkunterstützung auszustatten (DE 10 2005 025 966 A1).

Ein gutes Lenkverhalten im obigen Sinne stellt insbesondere bei Raupenfahrzeugen eine Herausforderung dar, deren Fahrwerk ein Raupenfahrwerk aufweist. Bei Kurvenfahrten treten hier hohe Wendemomente auf, die bei einem bekannten landwirtschaftlichem Fahrzeug dadurch bewältigt werden, dass zwei bezogen auf die Fahrzeuglängsachse gegenüberliegende Fahrwerksräder unterschiedlich angetrieben werden (DE 43 28 334 A1). Dort ist der Fahrantrieb mit einem Hydromotor ausgestattet, dessen Antriebsbewegung auf zwei Planetengetriebe geleitet wird. Zur Einstellung unterschiedlicher Antriebsbewegungen an den Fahrwerksrädern ist den beiden Planetengetrieben ein weiterer hydrostatischer Antrieb zugeordnet. Es ergibt sich ein gesteuertes Differentialgetriebe.

Das landwirtschaftliche Fahrzeug (DE 10 2010 046 043 A1), von dem die Erfindung ausgeht, ist als Mähdrescher mit einem Halbraupenfahrwerk ausgestaltet. Dabei weist das Raupenfahrwerk zwei auf die Fahrzeuglängsachse gegenüberliegende Raupenschiffe auf, die das Gewicht des vorderen Teils des Mähdreschers tragen. Der Mähdrescher ist zusätzlich mit einer hinteren Radachse ausgestattet, die durch eine Lenkeinrichtung lenkbar ist. Die hintere Radachse trägt das im Vergleich zum Vorderteil relativ leichte Heck des Mähdreschers und lässt sich dadurch mit geringen Lenkkräften lenken. Dennoch ergibt sich hier ein Optimierungspotential im Hinblick auf die Manövrierbarkeit des landwirtschaftlichen Fahrzeugs, da sich durch das Raupenfahrwerk wie oben erläutert ein beträchtliches Wendemoment einstellt.
Aus der nachveröffentlichten EP 2 930 086 A2 ist ein gattungsgemäßes landwirtschaftliches Fahrzeug bekannt, das die Merkmale des Oberbegriffs des Anspruchs 1 aufweist. EP 2 930 086 A2 ist ein Dokument nach Artikel 54(3) EPÜ.

Aus der DE 10 138 563 A1 ist ebenfalls ein gattungsgemäßes landwirtschaftliches Fahrzeug bekannt, das die Merkmale des Oberbegriffs des Anspruchs 1 offenbart, außer denjenigen, die die Regelung der Drehzahlen betreffen.

Der Erfindung liegt das Problem zugrunde, das bekannte landwirtschaftliche Fahrzeug derart auszugestalten und weiterzubilden, dass dessen Manövrierbarkeit verbessert wird.
Das obige Problem wird bei einem landwirtschaftlichen Fahrzeug gemäß dem Oberbegriff von Anspruch 1 durch die Merkmale des kennzeichnenden Teils von Anspruch 1 gelöst.
Der vorschlagsgemäßen Lösung liegt zunächst die grundsätzliche Überlegung zugrunde, dass für das Abfahren einer Soll-Bahnkurve die Regelung der Drehgeschwindigkeit von bezogen auf die Fahrzeuglängsachse gegenüberliegenden Fahrwerksrädern zu optimalen Ergebnissen führt. Es ist weiter erkannt worden, dass sich eine solche Regelung besonders gut dadurch umsetzen lässt, dass bezogen auf die Fahrzeuglängsachse gegenüberliegenden Fahrwerksrädern ein Lenk-Hydromotor zugeordnet ist. Dabei kann im einfachsten Fall sogar auf eine zusätzliche Hydropumpe für die Lenk-Hydromotoren verzichtet werden, wie weiter unten erläutert wird.
Weiterhin ist eine Lenkhilfseinrichtung zur Unterstützung der Lenkeinrichtung vorgesehen, die mindestens zwei oben genannte Lenk-Hydromotoren aufweist. Dabei weist die Lenkhilfseinrichtung weiter eine elektrische Lenkhilfssteuerung auf, die aus dem Lenkwinkel eines Lenkrades o. dgl. Soll-Drehzahlen für die Lenk-Hydromotoren ermittelt und die Lenk-Hydromotoren jeweils auf die Soll-Drehzahlen regelt. Bei den mit den Lenk-Hydromotoren gekoppelten Fahrwerksrädern handelt es sich vorzugsweise um die Fahrwerksräder, die von dem Fahrantrieb zur Erzeugung des Vortriebs des Fahrzeugs angetrieben werden. Grundsätzlich kann es sich bei den mit den Lenk-Hydromotoren gekoppelten Fahrwerksrädern aber auch vom Fahrantrieb nicht angetriebene Fahrwerksräder handeln.

Im Einzelnen wird vorgeschlagen, dass die Lenkhilfssteuerung ein Bahnmodul aufweist, das aus dem Lenkwinkel eine abzufahrende Soll-Bahnkurve ermittelt. Mit der Ermittlung der Soll-Bahnkurve lässt sich ein Lenkwinkel steuerungstechnisch in eine Soll-Bahnkurve umsetzen. Durch diesen steuerungstechnischen Zusammenhang lassen sich hier unterschiedliche Abhängigkeiten zwischen Soll-Bahnkurve und Lenkwinkel mit geringem Aufwand einstellen.

Der die Einstellung der Soll-Drehzahlen für die Lenk-Hydromotoren betreffende Regelkreis ist eine einfach zu realisierende und gleichzeitig effektive Maßnahme zur Einstellung unterschiedlicher Drehgeschwindigkeiten gegenüberliegender Fahrwerksräder.

Die vorschlagsgemäße Lösung ist auf alle möglichen Fahrwerke anwendbar. Als ganz besonders vorteilhaft hat sich die vorschlagsgemäße Lösung jedoch für ein Fahrwerk herausgestellt, das ein Raupenfahrwerk aufweist, bei dem sich mit der Lenkhilfseinrichtung trotz hoher Wendemomente eine besonders gute Manövrierbarkeit ergibt (Anspruch 2). Es darf darauf hingewiesen werden, dass das Fahrwerk auch mehr als ein Raupenfahrwerk umfassen kann.

Grundsätzlich kann der Lenkwinkel von einem Fahrerassistenzsystem vorgegeben sein, das Soll-Fahrspuren des landwirtschaftlichen Fahrzeugs automatisch einstellt. Bei der besonders bevorzugten Ausgestaltung gemäß Anspruch 3 geht der Lenkwinkel allerdings auf das Einschlagen eines Lenkrades zurück. Mit der vorschlagsgemäßen Lösung lassen sich ohne weiteres verschiedene Lenk-Betriebsmodi einstellen, in deren Abhängigkeit ein bestimmter Lenkeinschlag zu unterschiedlichen Soll-Bahnkurven führt.

Bei der weiter bevorzugten Ausgestaltung gemäß Anspruch 4 sind die Lenk-Hydromotoren als Axialkolbenmaschinen ausgestaltet, deren Schluckvolumen sich über den für Axialkolbenmaschinen charakteristischen Schwenkwinkel leicht verstellen lässt. Durch den vorschlagsgemäßen Regelkreis kann auf eine sensorgestützte Überprüfung des Schwenkwinkels verzichtet werden.

Eine besonders bevorzugte Ausgestaltung ergibt sich durch eine Kombination der Ansprüche 5 und 6, bei der auf eine zusätzliche, der Lenkhilfseinrichtung zugeordnete Hydropumpe verzichtet werden kann. Durch die Reihenschaltung der Lenk-Hydromotoren ist der durch die Lenk-Hydromotoren fließende Volumenstrom identisch, während die Lenkhilfssteuerung die Schwenkwinkel der Lenk-Hydromotoren unterschiedlich einstellt, und zwar derart, dass der jeweils kurveninnere Lenk-Hydromotor als Pumpe arbeitet und den jeweils kurvenäußeren Lenk-Hydromotor antreibt. Interessant dabei ist die Tatsache, dass der jeweils als Pumpe arbeitende Lenk-Hydromotor von dem jeweiligen Fahrwerksrad mitgenommen wird. Dies ist der Grund dafür, dass auf eine zusätzliche, der Lenkhilfseinrichtung zugeordnete Hydropumpe verzichtet werden kann.

Es wurde oben bereits darauf hingewiesen, dass die vorschlagsgemäße Lösung besonders vorteilhaft auf Raupenfahrwerke anwendbar ist. Dabei kann es sich vorzugsweise um ein Halbraupenfahrwerk (Anspruch 7) oder um ein Vollraupenfahrwerk (Anspruch 8) handeln.

Die ebenfalls bevorzugte Ausgestaltung gemäß dem Anspruch 10 betrifft eine konkrete Ausgestaltung für die Regelung des Abfahrens einer Bahnkurve. Gemäß Anspruch 10 ist es so, dass die Lenkhilfssteuerung aus der Fahrzeuggeschwindigkeit und aus der Soll-Bahnkurve die Soll-Drehzahlen für die Lenk-Hydromotoren ermittelt, wobei die Lenkhilfssteuerung die Schwenkmittel der Lenk-Hydromotoren vorzugsweise auf die ermittelten Soll-Drehzahlen regelt. Dies bedeutet, dass die Lenkhilfssteuerung in einem Regelkreis die Schwenkwinkel der Lenk-Hydromotoren so verändert, dass sich die ermittelten Soll-Drehzahlen nach einem Einregelvorgang einstellen. Hierdurch ergibt sich eine genaue Einstellbarkeit der Soll-Bahnkurve, ohne dass die Schwenkwinkel der Lenk-Hydromotoren sensorisch überwacht werden müssen, wie oben angedeutet worden ist.

Bei der weiter bevorzugten Ausgestaltung gemäß Anspruch 12 stellt die Lenkhilfssteuerung die Schwenkwinkel der Lenk-Hydromotoren bei Geradeausfahrt auf einen Basisschwenkwinkel ein derart, dass sich die Funktion eines Sperrdifferentials ergibt. Der Basisschwenkwinkel muss dabei größer als 0° sein, um überhaupt eine entsprechende Kraftwirkung von einem Lenk-Hydromotor auf den anderen Lenk-Hydromotor zu ermöglichen. Um Verluste zu reduzieren, ist der Basisschwenkwinkel jedoch möglichst gering zu halten. Das gilt insbesondere für hohe Fahrgeschwindigkeiten mit den entsprechenden Volumenströmen durch die Lenk-Hydromotoren. In besonders bevorzugter Ausgestaltung ist es entsprechend so, dass der Basisschwenkwinkel bei ansteigender Fahrzeuggeschwindigkeit absinkt.

Die weiter bevorzugte Ausgestaltung gemäß Anspruch 13 betrifft die Situation, bei der eine Radbremse des landwirtschaftlichen Fahrzeugs einseitig betätigt wird. Um die Lenkwirkung dieser einseitigen Betätigung der Radbremse zu unterstützen, stellt die Lenkhilfssteuerung für den Lenk-Hydromotor des gebremsten Fahrwerksrads einen Maximal-Schwenkwinkel und für den Lenk-Hydromotor des ungebremsten Fahrwerksrads einen Minimal-Schwenkwinkel ein. Damit ergibt sich eine insgesamt dreifache Lenkbetätigung, nämlich durch die Lenkeinrichtung, durch die Lenkhilfseinrichtung und durch die Radbremse. Im Ergebnis ergibt sich bei geeigneter Auslegung die Möglichkeit der Realisierung eines außerordentlich geringen Wenderadius.

Im Folgenden wird die Erfindung anhand einer lediglich ein Ausführungsbeispiel darstellenden Zeichnung näher erläutert. In der Zeichnung zeigt
Fig. 1 ein vorschlagsgemäßes landwirtschaftliches Fahrzeug mit einem Halbraupenfahrwerk,
Fig. 2 die Lenkhilfseinrichtung des landwirtschaftlichen Fahrzeugs gemäß Fig. 1 in einer Prinzipdarstellung, und
Fig. 3 die Lenkhilfssteuerung der Lenkhilfseinrichtung gemäß Fig. 1 in einer Strukturdarstellung.

Das vorschlagsgemäße landwirtschaftliche Fahrzeug kann ganz unterschiedlich ausgestaltet sein. Beispielsweise kann es sich bei dem landwirtschaftlichen Fahrzeug um einen Traktor oder um eine selbstfahrende Erntemaschine, wie einen Mähdrescher oder einen Feldhäcksler handeln. Die Vorzüge der vorschlagsgemäßen Lösung zeigen sich besonders deutlich bei Raupenfahrzeugen mit einem Raupenfahrwerk. Bei dem dargestellten und insoweit bevorzugten Ausführungsbeispiel handelt es sich bei dem landwirtschaftlichen Fahrzeug um einen Mähdrescher mit Halbraupenfahrwerk, wie noch erläutert wird.

Ganz allgemein weist das Fahrwerk 1 des landwirtschaftlichen Fahrzeugs mindestens zwei bezogen auf die Fahrzeuglängsachse 2 gegenüberliegende Fahrwerksräder 3-8 auf. Hier und vorzugsweise sind die Fahrwerksräder 3,5,7 bezogen auf die Fahrzeuglängsachse 2 gegenüberliegend zu den Fahrwerksrädern 4,6,8 angeordnet. Dabei sind die Fahrwerksräder 3-6 Bestandteil eines Raupenfahrwerks 1a und die Fahrwerksräder 7, 8 Bestandteil eines Radfahrwerks 1b. Entsprechend laufen die Fahrwerksräder 3-6 in zugeordneten Raupenschiffen 24, 25 und die Fahrwerksräder 7, 8 auf dem Boden. Der Begriff "Fahrwerksrad" ist vorliegend also weit zu verstehen. Er umfasst sowohl Räder, die einem Raupenfahrwerk zugeordnet sind und in entsprechenden Raupenschiffen laufen, als auch Räder, die auf dem Boden abrollen.

Das Fahrwerk 1 weist weiter einen Fahrantrieb 9 für die Erzeugung eines Vortriebs des Fahrzeugs entlang einer Bahn 10 auf. Als "Bahn" des landwirtschaftlichen Fahrzeugs wird vorliegend der Verlauf eines Referenzpunktes auf der Fahrzeuglängsachse 2 während der Fahrt des landwirtschaftlichen Fahrzeugs verstanden.

Bei dem dargestellten Ausführungsbeispiel sind jedenfalls die Fahrwerksräder 3,4 durch den Fahrantrieb 9 antreibbar. Grundsätzlich ist es auch denkbar, dass alle Fahrwerksräder 3-6 des Raupenfahrwerks oder alle Fahrwerksräder 3-8 des landwirtschaftlichen Fahrzeugs insgesamt durch den Fahrantrieb 9 antreibbar sind.

Für die Einstellung einer Soll-Bahnkurve in Abhängigkeit von einem Lenkwinkel γ ist eine Lenkeinrichtung 12 vorgesehen. Die Lenkeinrichtung 12 basiert hier auf der Lenkbarkeit der Hinterachse des landwirtschaftlichen Fahrzeugs, die ein Radfahrwerk 1b aufweist und damit keinem Raupenfahrwerk zugeordnet ist. Grundsätzlich kann die Funktion der Lenkeinrichtung 12 aber auch auf ein unterschiedliches Antreiben gegenüberliegender Fahrwerksräder 3-8 mittels des Fahrantriebs 9 zurückgehen, was insbesondere bei einem noch zu erläuternden Vollraupenfahrwerk vorteilhaft sein kann.

Für die Ausgestaltung des Fahrantriebs 9 sind zahlreiche vorteilhafte Varianten denkbar.

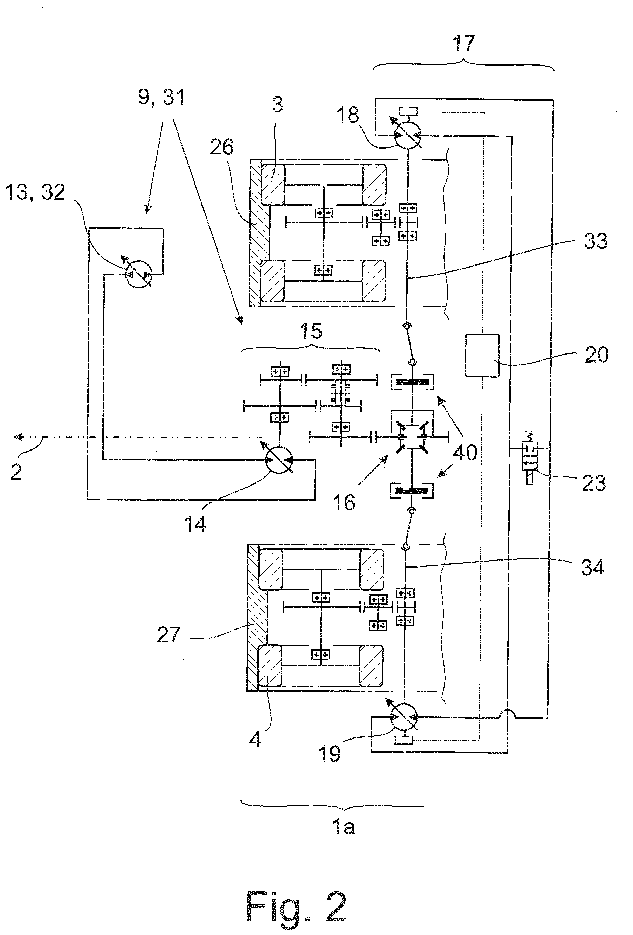

Bei dem in Fig. 2 dargestellten und insoweit bevorzugten Ausführungsbeispiel weist der Fahrantrieb 9 einen hydrostatischen Antrieb mit einer Hauptantrieb-Hydropumpe 13 und einem Hauptantrieb-Hydromotor 14 auf, dem ein zweigängiges Stirnradgetriebe 15 nachgeschaltet ist. Das Stirnradgetriebe 15 wirkt auf ein Differentialgetriebe 16, das die Antriebsbewegung auf die beiden Fahrwerksräder 3,4 verteilt. Grundsätzlich kann es sich bei dem Differentialgetriebe 16 bereits um ein gesteuertes Differentialgetriebe handeln, das in Abhängigkeit von dem Lenkwinkel γ eine unterschiedliche Verteilung der Antriebsbewegung vornimmt. Hier und vorzugsweise handelt es sich aber um ein ungesteuertes Differentialgetriebe.

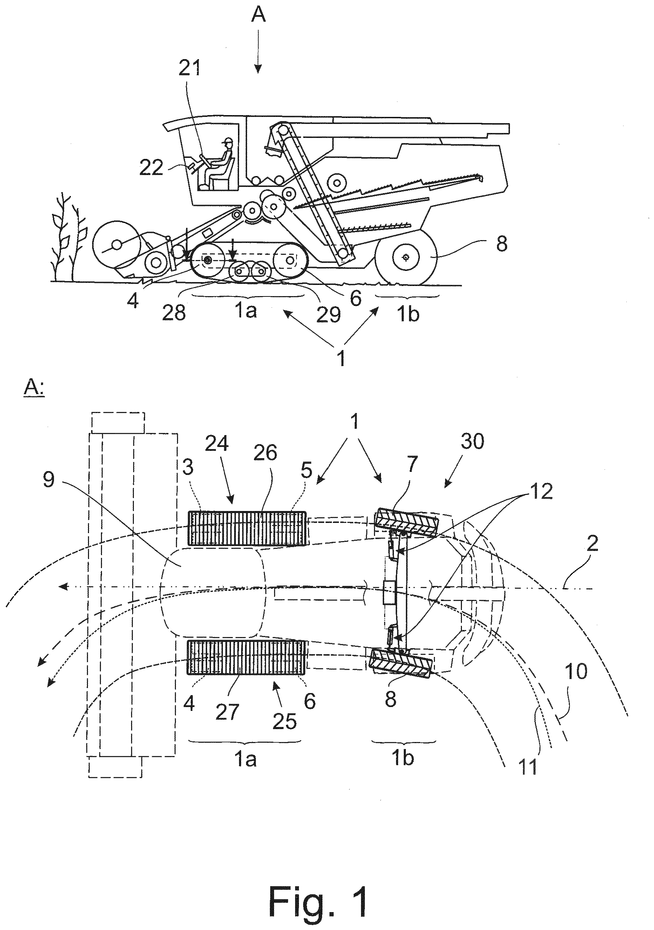

Eine Zusammenschau der Fig. 1 und 2 zeigt, dass das Abfahren einer Soll-Bahnkurve 11 allein durch die Lenkung des Radfahrwerks 1b mittels der Lenkeinrichtung 12 nur bei großen Kurvenradien möglich ist, da die Lenkeinrichtung 12 stets gegen das hohe Wendemoment des Raupenfahrwerks 1a arbeitet. Daher ist es vorschlagsgemäß vorgesehen, dass eine Lenkhilfseinrichtung 17 zur Unterstützung der Lenkeinrichtung 12 vorgesehen ist. Die Lenkhilfseinrichtung 17 weist mindestens zwei, hier und vorzugsweise genau zwei, Lenk-Hydromotoren 18, 19 auf, wobei mindestens zwei, hier und vorzugsweise genau zwei, bezogen auf die Fahrzeuglängsachse 2 gegenüberliegende Fahrwerksräder 3,4 antriebstechnisch jeweils mit einem Lenk-Hydromotor 18,19 gekoppelt sind. Damit ist grundsätzlich eine gezielte Beeinflussung der Fahrwerksräder 3,4 für die Unterstützung einer Kurvenfahrt möglich. Dies geht auf die Überlegung zurück, dass das kurveninnere Fahrwerksrad über einen vorbestimmten Kurvenabschnitt eine geringere Bewegung vollzieht als das jeweils kurvenäußere Fahrwerksrad 4. Bei dieser Überlegung macht es keinen Unterschied, ob das jeweilige Fahrwerksrad einem Raupenfahrwerk 1a oder einem Radfahrwerk zugeordnet ist.

Von besonderer Bedeutung für die vorschlagsgemäße Lösung ist die Tatsache, dass die Lenkhilfseinrichtung 17 eine elektrische Lenkhilfssteuerung 20 aufweist, die aus dem jeweiligen Lenkwinkel γ Soll-Drehzahlen ω₁ₛₒₗₗ, ω₂ₛₒₗₗ für die Lenk-Hydromotoren 18,19 ermittelt und die Lenk-Hydromotoren 18,19 jeweils auf die Soll-Drehzahlen ω₁ₛₒₗₗ, ω₂ₛₒₗₗ regelt. Dies bedeutet, dass die beiden Lenk-Hydromotoren 18,19 die Stellglieder zweier Regelkreise sind, deren Führungsgröße jeweils eine Soll-Drehzahl ω₁ₛₒₗₗ, ω₂ₛₒₗₗ für den jeweiligen Lenk-Hydromotor 18,19 ist. Bei der Stellgröße handelt es sich hier um die Schwenkwinkel der Lenk-Hydromotoren 18,19 soweit diese als Axialkolbenmaschinen ausgestaltet sind. Mit der vorschlagsgemäßen Lösung ist eine Optimierung des Abfahrens einer Soll-Bahnkurve im Hinblick auf eine Reduzierung des Kurvenradius sowie im Hinblick auf eine Genauigkeitssteigerung beim Abfahren der Soll-Bahnkurve möglich, ohne dass aufwendige Sensorsysteme, insbesondere Schwenkwinkelsensoren für die Lenk-Hydromotoren 18,19, erforderlich sind. Vielmehr reicht die Erfassung der Drehzahlen der Lenk-Hydromotoren 18,19 aus, um die vorschlagsgemäße Regelung ausführen zu können.

Für das Verständnis der vorschlagsgemäßen Lehre ist die Drehzahl der Lenk-Hydromotoren 18,19 umfassend zu verstehen. Diese Drehzahl umfasst beispielsweise auch die Drehzahl der dem jeweiligen Lenk-Hydromotor 18,19 vor- oder nachgeschalteten Komponente wie ein Fahrwerksrad 3-8, die bzw. das mit dem jeweiligen Lenk-Hydromotor 18,19 bewegungsgekoppelt ist.

Das Raupenfahrwerk 1a weist hier zwei bezogen auf die Fahrzeuglängsachse 2 gegenüberliegende Raupenschiffe 24,25 auf, wobei den Raupenschiffen 24,25 jeweils mindestens zwei Fahrwerksräder 3,5; 4,6 zugeordnet sind. Hier ist es im Einzelnen so, dass den Raupenschiffen 24,25 jeweils ein mit einem Lenk-Hydromotor 18, 19 gekoppeltes Fahrwerksrad 3,4 zugeordnet ist, so dass die Lenkhilfseinrichtung 17 dem Raupenfahrwerk 1a zugeordnet ist.

Auf den Fahrwerksrädern 3,5 bzw. 4,6 laufen entsprechende Raupenbänder 26,27. In Bodennähe sind zwischen den Fahrwerksrädern 3,5; 4,6 jeweils zwei Stützräder 28,29 vorgesehen, die einen unteren Strang des jeweiligen Raupenbandes 26,27 in durchgehendem Bodenkontakt halten, so dass sich eine gleichmäßige Gewichtsverteilung über die gesamte Kontaktfläche zwischen dem Boden und dem jeweiligen Raupenband 26,27 ergibt.

Bei dem obigen Lenkwinkel γ, der maßgeblich für die Einstellung einer Soll-Bahnkurve 11 ist, handelt es sich vorzugsweise um den Lenkwinkel γ eines Lenkrades 21 des landwirtschaftlichen Fahrzeugs. Hierfür ist das Lenkrad 21 mit einem zugeordneten Lenkwinkelgeber 22 ausgestattet, aus dem sich der jeweilige Lenkwinkel γ des Lenkrades 21 ableiten lässt. Alternativ oder zusätzlich kann es aber auch vorgesehen sein, dass der Lenkwinkel γ von einem nicht dargestellten Fahrerassistenzsystem vorgegeben wird, welches der automatischen Einstellung vorbestimmter Soll-Fahrspuren des landwirtschaftlichen Fahrzeugs dient.

Wie weiter oben angedeutet, kann es sich bei den Lenk-Hydromotoren 18,19 um Axialkolbenmaschinen jeweils mit verstellbarem Schwenkwinkel S₁, S₂ handeln, wobei die Lenkhilfssteuerung 20 die Lenk-Hydromotoren 18,19 durch Vorgabe des jeweiligen Schwenkwinkels S₁, S₂ auf die Soll-Drehzahlen ω₁ₛₒₗₗ, ω₂ₛₒₗₗ regelt. Interessant bei der vorschlagsgemäßen Lösung ist die Tatsache, dass eine zusätzliche, der Lenkhilfseinrichtung 17 zugeordnete Hydropumpe nicht vorgesehen sein muss. Dies zeigt die Darstellung gemäß Fig. 2. Hier ist es so, dass die Lenkhilfssteuerung 20 die Schwenkwinkel S₁, S₂ der Lenk-Hydromotoren 18,19 derart einstellt, dass beim Abfahren einer Soll-Bahnkurve 11 der kurveninnere Lenk-Hydromotor 18,19, bei der Darstellung gemäß Fig. 1 der Lenk-Hydromotor 19, als Pumpe arbeitet und von dem zugeordneten, inneren Fahrwerksrad 3,4 bei der Darstellung gemäß Fig. 1 dem Fahrwerksrad 4, angetrieben wird. Gleichzeitig arbeitet der kurvenäußere Lenk-Hydromotor 18,19, in der Darstellung gemäß Fig. 1 der Lenk-Hydromotor 18, als Motor. Der kurvenäußere Lenk-Hydromotor 18,19 treibt dann das kurvenäußere Fahrwerksrad 3,4 an.

Es lässt sich der Darstellung gemäß Fig. 2 entnehmen, dass die Lenk-Hydromotoren 18,19 hydraulisch in Reihe geschaltet sind, sofern das Abschaltventil 23 nicht schaltet. Insoweit lässt sich die Reihenschaltung der Lenk-Hydromotoren 18,19 durch das Abschaltventil 23 an- bzw. abschalten. Mit der Reihenschaltung der beiden Lenk-Hydromotoren 18,19 lässt sich der oben angesprochene Pump- bzw. Motorbetrieb der Lenk-Hydromotoren 18,19 auf besonders einfache Weise realisieren. Dies liegt daran, dass derselbe Volumenstrom durch beide Lenk-Hydromotoren 18,19 hindurchströmt, die Schwenkwinkel und damit die Schluckvolumen der beiden Lenk-Hydromotoren 18,19 jedoch durch die Lenkhilfssteuerung 20 in Abhängigkeit von dem Lenkwinkel γ einstellbar sind.

Bei dem dargestellten und insoweit bevorzugten Ausführungsbeispiel ist das Fahrwerk 1 des landwirtschaftlichen Fahrzeugs als Halbraupenfahrwerk ausgestaltet, das neben dem Raupenfahrwerk 1a eine durch die Lenkeinrichtung 12 lenkbare, hier und vorzugsweise nicht angetriebene, Radachse 30 eines Radfahrwerks 1b aufweist, die gleichzeitig die Hinterachse des landwirtschaftlichen Fahrzeugs bildet. Die dargestellte Kombination einer lenkbaren Hinterachse mit einer, dem Raupenfahrwerk 1a zugeordneten Lenkhilfseinrichtung 17 ergibt einerseits eine besonders gute Verteilung des Gewichts des landwirtschaftlichen Fahrzeugs auf eine vergleichsweise große Fläche und andererseits eine besonders gute Manövrierbarkeit des landwirtschaftlichen Fahrzeugs insgesamt.

Alternativ zu der Ausgestaltung des Fahrwerks 1 als Halbraupenfahrwerk kann es vorgesehen sein, dass das Fahrwerk 1 als Vollraupenfahrwerk ausgestaltet ist, das aus dem Raupenfahrwerk 1a besteht oder aus dem Raupenfahrwerk 1a und ggf. mindestens einem weiteren Raupenfahrwerk 1a besteht. Ein Radfahrwerk ist dann also nicht vorhanden. Hier entstehen regelmässig beträchtliche Wendemomente, so dass sich die vorschlagsgemäße Lenkhilfseinrichtung 17 für ein Vollraupenfahrwerk als besonders vorteilhaft darstellt.

Der Fahrantrieb 9 des landwirtschaftlichen Fahrzeugs ist, wie in Fig. 2 dargestellt, mit einem Hauptantriebsstrang 31 ausgestattet, der einen Hauptantrieb 32 und zwei Antriebswellen 33,34, die zwei bezogen auf die Fahrzeuglängsachse 2 gegenüberliegenden Fahrwerksrädern 3,4 zugeordnet sind, aufweist. Wesentlich dabei ist die Tatsache, dass die Lenk-Hydromotoren 18,19 zusätzlich zu dem Hauptantrieb 32 antriebstechnisch mit den Antriebswellen 33,34 gekoppelt sind. Der Hauptantrieb 32 weist hier und vorzugsweise mindestens einen oben bereits angesprochenen Hauptantrieb-Hydromotor 14 auf.

Bei der in Fig. 2 dargestellten und insoweit bevorzugten Anordnung ist es so, dass die Lenk-Hydromotoren 18,19 und der Hauptantrieb-Hydromotor 14 mit denselben Antriebswellen 33,34 gekoppelt bzw. koppelbar sind. Grundsätzlich kann es aber auch vorgesehen sein, dass der Hauptantrieb-Hydromotor 14 und die Lenk-Hydromotoren 18,19 auf unterschiedliche Antriebswellen und damit auf unterschiedliche Fahrwerksräder 3-8 wirken.

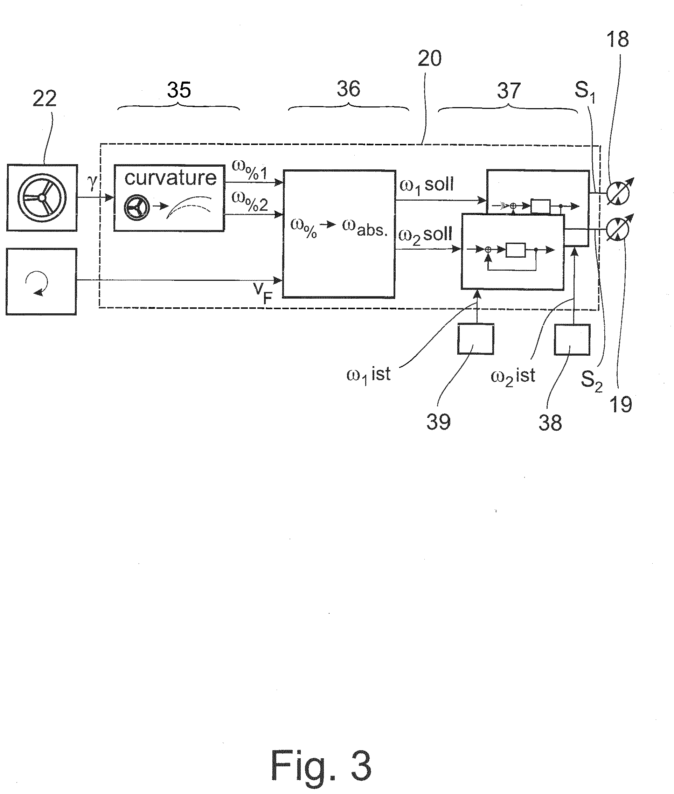

Fig. 3 zeigt den grundsätzlichen Aufbau der Lenkhilfssteuerung 20 der Lenkhilfseinrichtung 17. Eine wesentliche Aufgabe der Lenkhilfssteuerung 20 ist die Ermittlung der Soll-Drehzahlen ω₁ₛₒₗₗ, ω₂ₛₒₗₗ für die Lenk-Hydromotoren 18,19. Hierfür weist die Lenkhilfssteuerung 20 zunächst ein Bahnmodul 35 auf, das aus dem Lenkwinkel γ eine abzufahrende Soll-Bahnkurve 11 ermittelt. Im einfachsten Fall wird die Soll-Bahnkurve 11 durch Kreissegmente mit entsprechenden Radien angenähert.

Das Bahnmodul 35 erzeugt nun aus der ermittelten Soll-Bahnkurve 11 zunächst die Relativ-Drehgeschwindigkeiten ωᵣₑₗ₁ und ωᵣₑₗ₂, die wiedergeben, welche Drehgeschwindigkeiten die gegenüberliegenden Fahrwerksräder 3,4 relativ zueinander aufweisen. Wie oben angedeutet, dreht das kurveninnere Fahrwerksrad stets langsamer als das kurvenäußere Fahrwerksrad.

Der Lenkhilfssteuerung 20 ist zusätzlich ein Umsetzungsmodul 36 zugeordnet, dass aus den Relativ-Drehzahlen ω_{%1} und ω_{%2} sowie aus der Fahrzeuggeschwindigkeit v_{F} die absoluten Soll-Drehzahlen ω₁ₛₒₗₗ, ω₂ₛₒₗₗ für die Lenk-Hydromotoren 18,19 ermittelt. Ganz allgemein ist es so, dass die Lenkhilfssteuerung 20 aus der Fahrzeuggeschwindigkeit v_{F} und aus der Soll-Bahnkurve 11 die Soll-Drehzahlen ω₁ₛₒₗₗ, ω₂ₛₒₗₗ für die Lenk-Hydromotoren 18,19 ermittelt. Die Fahrzeuggeschwindigkeit v_{F} ist die Geschwindigkeit des landwirtschaftlichen Fahrzeugs entlang der Fahrzeuglängsachse 2. Hierfür steht dem landwirtschaftlichen Fahrzeug regelmäßig eine entsprechende Messeinrichtung zur Verfügung, die hier nicht dargestellt ist.

Die Lenkhilfssteuerung 20 weist schließlich ein Regelmodul 37 auf, das die Schwenkwinkel S₁, S₂ der Lenk-Hydromotoren 18,19 auf die jeweils ermittelten Soll-Drehzahlen ω₁ₛₒₗₗ, ω₂ₛₒₗₗ regelt. Hierfür ist den Lenk-Hydromotoren 18,19 jeweils ein Drehzahlsensor 38,39 zur Erfassung der jeweiligen Ist-Drehzahl ω₁ₜᵢₛₜ, ω₂ᵢₛₜ zugeordnet, wobei die Lenkhilfssteuerung 20, hier das Regelungsmodul 37, die Regelung der Schwenkwinkel S₁, S₂ auf die ermittelten Soll-Drehzahlen ω₁ₛₒₗₗ, ω₂ₛₒₗₗ basierend auf den Sensorsignalen, also den Ist-Drehzahlen ω₁ₜᵢₛₜ, ω₂ᵢₛₜ der Drehzahlsensoren 38,39 vornimmt. Die Zuordnung der Drehzahlsensoren 38, 39 zu den Lenk-Hydromotoren 18, 19 kann auch indirekt vorgesehen sein. Beispielsweise kann es sich bei diesen Drehzahlsensoren 38, 39 um Radsensoren der Fahrwerksräder 3, 4 oder um Sensoren der Antriebswellen 33, 34 handeln.

Die vorschlagsgemäße Lenkhilfseinrichtung 17 kann grundsätzlich auch bei der Geradeausfahrt hilfreich sein. Für den Fall, dass die beiden Schwenkwinkel S₁, S₂ der Lenk-Hydromotoren 18,19 identisch zueinander eingestellt werden, wirkt die Lenkhilfseinrichtung 17 insbesondere bei der oben angesprochenen Reihenschaltung der Lenk-Hydromotoren 18,19 als Sperrdifferential. Das Ansprechverhalten dieses hydrostatisch realisierten Sperrdifferentials verbessert sich mit der Vergrößerung des Schwenkwinkels und damit des Schluckvolumens der Lenk-Hydromotoren 18,19. Allerdings ist damit auch eine Erhöhung der hydrostatischen Verluste verbunden. Für die Geradeausfahrt wird zunächst vorgeschlagen, dass die Lenkhilfssteuerung 20 die Schwenkwinkel S₁, S₂ der Lenk-Hydromotoren 18,19 auf einen Basisschwenkwinkel einstellt, der ungleich 0° ist. Das ist sachgerecht, da bei einem Basisschwenkwinkel von 0° ein Betriebspunkt der beiden Lenk-Hydromotoren 18,19 erreicht ist, in dem keine Abtriebsmomente durch die Lenk-Hydromotoren 18,19 erzeugt werden können. Weiter vorzugsweise ist es so, dass sich der von der Lenkhilfssteuerung 20 vorgegebene Basisschwenkwinkel der beiden Lenk-Hydromotoren 18,19 in Abhängigkeit von der Fahrzeuggeschwindigkeit ändert, insbesondere mit ansteigender Fahrzeuggeschwindigkeit absinkt, so dass die hydrostatischen Verluste, insbesondere bei höheren Fahrgeschwindigkeiten vergleichsweise gering gehalten werden können.

Für den Fall, dass das landwirtschaftliche Fahrzeug, wie in Fig. 2 gezeigt, eine Radbremse 40 aufweist, die für gegenüberliegende Fahrwerksräder 3,4 einzeln betätigbar ist, kann die vorschlagsgemäße Lenkhilfseinrichtung 17 insbesondere bei engen Kurvenfahrten ganz besonders vorteilhaft sein. Hierzu wird vorgeschlagen, dass die Lenkhilfssteuerung 20 bei einer Betätigung der Radbremse 40 für den Lenk-Hydromotor 18,19 des gebremsten Fahrwerksrades 3,4 einen Maximal-Schwenkwinkel und für den Lenk-Hydromotor 18,19 des ungebremsten Fahrwerksrades 3,4 einen Minimal-Schwenkwinkel einstellt. Bei der oben genannten Reihenschaltung der beiden Lenk-Hydromotoren 18,19 bedeutet dies, dass der Lenk-Hydromotor 18,19 auf der gebremsten Seite als Pumpe arbeitet, während der Lenk-Hydromotor 18,19 auf der ungebremsten Seite als Motor arbeitet. Dabei ist es in einer bevorzugten Ausgestaltung vorgesehen, dass der Minimal-Schwenkwinkel ungleich Null ist, so dass der Druckabfall über den Lenk-Hydromotor 18,19 der ungebremsten Seite nicht übermäßig groß wird. Im Einzelnen wird vorgeschlagen, dass der Minimal-Schwenkwinkel der Schwenkwinkel ist, bei dem der Druckabfall über den Lenk-Hydromotor 18,19 des ungebremsten Fahrwerksrades 3,4 einen vorbestimmten Maximalwert einnimmt, insbesondere einen vorbestimmten Maximalwert nicht überschreitet.

Ganz allgemein muss dafür gesorgt werden, dass insbesondere bei der oben angesprochenen Reihenschaltung der Lenk-Hydromotoren 18,19 keine übermäßigen Druckabfälle über den Lenk-Hydromotoren 18, 19 auftreten, um Beschädigungen der Lenk-Hydromotoren 18,19 selbst oder der jeweiligen hydraulischen Zuleitungen zu vermeiden. Insoweit ist in der Lenkhilfssteuerung 20 vorzugsweise ein entsprechender Mechanismus integriert, der dafür sorgt, dass die Differenz in den Druckabfällen über den Lenk-Hydromotoren 18, 19 einen vorbestimmten Maximalwert nicht überschreitet. Beim Auftreten eines solchen Falles wird vorzugsweise in einer ersten Maßnahme der kleinere Schwenkwinkel S₁, S₂ der beiden Lenk-Hydromotoren 18,19 angehoben. Grundsätzlich sind hier zahlreiche Strategien anwendbar.

Es darf schließlich darauf hingewiesen werden, dass die vorschlagsgemäße Lenkhilfseinrichtung 17 ohne eine zusätzliche Hydropumpe auskommt, was einen konstruktiv einfachen und damit vergleichsweise kostengünstigen Aufbau ermöglicht. Grundsätzlich ist es aber denkbar, dass den beiden Lenk-Hydromotoren 18,19 eine separate Hydropumpe zugeordnet ist, mit der sich bei entsprechender Auslegung eine besondere hohe Dynamik bei der Einstellung von Soll-Bahnkurven erzielen lässt.

### Bezugszeichenliste

- 1: Fahrwerk, 1a Raupenfahrwerk, 1b Radfahrwerk
- 2: Fahrzeuglängsachse
- 3-8: Fahrwerksräder
- 9: Fahrantrieb
- 10: Bahn
- 11: Soll-Bahnkurve
- 12: Lenkeinrichtung
- 13: Hauptantrieb-Hydropumpe
- 14: Hauptantrieb-Hydromotor
- 15: Stirnradgetriebe
- 16: Differentialgetriebe
- 17: Lenkhilfseinrichtung
- 18,19: Lenk-Hydromotoren
- 20: Lenkhilfssteuerung
- 21: Lenkrad
- 22: Lenkwinkelgeber
- S₁,S₂: Schwenkwinkel
- ω₁ₛₒₗₗ , ω₂ₛₒₗₗ: Soll-Drehzahl
- 23: Abschaltventil
- 24,25: Raupenschiffe
- 26,27: Raupenbänder
- 28,29: Stützräder
- 30: Radachse
- 31: Hauptantriebsstrang
- 32: Hauptantrieb
- 33,34: Antriebswellen
- 35: Bahnmodul
- γ: Lenkwinkel
- 36: Umsetzungsmodul
- 37: Regelungsmodul
- 38,39: Drehzahlsensoren
- 40: Radbremse

## Patentansprüche

1. Landwirtschaftliches Fahrzeug, insbesondere Raupenfahrzeug, mit einem Fahrwerk (1) mit mindestens zwei bezogen auf die Fahrzeuglängsachse (2) gegenüberliegenden Fahrwerksrädern (3-8), wobei das Fahrwerk (1) einen Fahrantrieb (9) für die Erzeugung eines Vortriebs entlang einer Bahn (10) und eine Lenkeinrichtung (12) für die Einstellung einer Soll-Bahnkurve (11) in Abhängigkeit von einem Lenkwinkel (γ) aufweist, wobei eine Lenkhilfseinrichtung (17) zur Unterstützung der Lenkeinrichtung (12) vorgesehen ist, dass die Lenkhilfseinrichtung (17) mindestens zwei Lenk-Hydromotoren (18,19) aufweist und dass mindestens zwei bezogen auf die Fahrzeuglängsachse (2) gegenüberliegende Fahrwerksräder (3,4) antriebstechnisch jeweils mit einem Lenk-Hydromotor (18,19) gekoppelt sind und dass die Lenkhilfseinrichtung (17) eine elektrische Lenkhilfssteuerung (20) aufweist, die aus dem Lenkwinkel (γ) Soll-Drehzahlen (ω₁ₛₒₗₗ, ω₂ₛₒₗₗ) für die Lenk-Hydromotoren (18,19) ermittelt und die Lenk-Hydromotoren (18,19) jeweils auf die Soll-Drehzahlen (ω₁ₛₒₗₗ, ω₂ₛₒₗₗ) regelt,
**dadurch gekennzeichnet,**
**dass** die Lenkhilfssteuerung (20) ein Bahnmodul (35) aufweist, das aus dem Lenkwinkel (γ) eine abzufahrende Soll-Bahnkurve (11) ermittelt.

2. Landwirtschaftliches Fahrzeug nach Anspruch 1, **dadurch gekennzeichnet,**
**dass** das Fahrwerk (1) ein Raupenfahrwerk (1a) mit zwei bezogen auf die Fahrzeuglängsachse (2) gegenüberliegenden Raupenschiffen (24,25) aufweist und dass den Raupenschiffen (24,25) jeweils ein mit einem Lenk-Hydromotor (18, 19) gekoppeltes Fahrwerksrad (3,4) zugeordnet ist.

3. Landwirtschaftliches Fahrzeug nach Anspruch 1 oder 2, **dadurch gekennzeichnet, dass** ein Lenkrad (21) mit einem zugeordneten Lenkwinkelgeber (22) vorgesehen ist, der den Lenkwinkel (γ) vorgibt.

4. Landwirtschaftliches Fahrzeug nach einem der vorhergehenden Ansprüche,
**dadurch gekennzeichnet, dass** die Lenk-Hydromotoren (18,19) als Axialkolbenmaschinen mit verstellbarem Schwenkwinkel (S₁, S₂) ausgestaltet sind und dass die Lenkhilfssteuerung (20) die Lenk-Hydromotoren (18,19) durch Vorgabe des jeweiligen Schwenkwinkels (S₁, S₂) auf die Soll-Drehzahlen (ω₁ₛₒₗₗ, ω₂ₛₒₗₗ) regelt.

5. Landwirtschaftliches Fahrzeug nach einem der vorhergehenden Ansprüche,
**dadurch gekennzeichnet, dass** die Lenkhilfssteuerung (20) die Schwenkwinkel (S₁, S₂) der Lenk-Hydromotoren (18,19) derart einstellt, dass beim Abfahren einer Soll-Bahnkurve (11) der kurveninnere Lenk-Hydromotor (18,19) als Pumpe arbeitet und von dem zugeordneten, inneren Fahrwerksrad (3,4) angetrieben wird und der kurvenäußere Lenk-Hydromotor (18,19) als Motor arbeitet und das kurvenäußere Fahrwerksrad (3,4) antreibt.

6. Landwirtschaftliches Fahrzeug nach einem der vorhergehenden Ansprüche,
**dadurch gekennzeichnet, dass** die Lenk-Hydromotoren (18,19) hydraulisch in Reihe geschaltet oder schaltbar sind.

7. Landwirtschaftliches Fahrzeug nach einem der vorhergehenden Ansprüche,
**dadurch gekennzeichnet, dass** das Fahrwerk (1) als Halbraupenfahrwerk ausgestaltet ist, das neben dem Raupenfahrwerk (1a) eine durch die Lenkeinrichtung (12) lenkbare, vorzugsweise nicht angetriebenes, Radfahrwerk (1 b) mit einer Radachse (30) aufweist.

8. Landwirtschaftliches Fahrzeug nach einem der vorhergehenden Ansprüche,
**dadurch gekennzeichnet, dass** das Fahrwerk (1) als Vollraupenfahrwerk ausgestaltet ist, das aus dem Raupenfahrwerk (1a) besteht oder das aus dem Raupenfahrwerk (1a) und ggf. mindestens einem weiteren Raupenfahrwerk (1a) besteht.

9. Landwirtschaftliches Fahrzeug nach einem der vorhergehenden Ansprüche,
**dadurch gekennzeichnet, dass** der Fahrantrieb (9) einen Hauptantriebsstrang (31) mit einem Hauptantrieb (32) und mit zwei Antriebswellen (33,34), die zwei bezogen auf die Fahrzeuglängsachse (2) gegenüberliegenden Fahrwerksrädern (3,4) zugeordnet sind, aufweist und dass die Lenk-Hydromotoren (18,19) zusätzlich zu dem Hauptantrieb (32) antriebstechnisch mit den Antriebswellen (33,34) gekoppelt sind, vorzugsweise, dass der Hauptantrieb (32) mindestens einen Hauptantrieb-Hydromotor (14) aufweist.

10. Landwirtschaftliches Fahrzeug nach einem der vorangehenden Ansprüche,
**dadurch gekennzeichnet, dass** die Lenkhilfssteuerung (20) aus der Fahrzeuggeschwindigkeit (v_{F}) und aus der Soll-Bahnkurve (11) die Soll-Drehzahlen (ω₁ₛₒₗₗ, ω₂ₛₒₗₗ) für die Lenk-Hydromotoren (18,19) ermittelt.

11. Landwirtschaftliches Fahrzeug nach Anspruch 10, **dadurch gekennzeichnet,**
**dass** die Lenkhilfssteuerung (20) die Schwenkwinkel (S₁, S₂) der Lenk-Hydromotoren (18,19) auf die ermittelten Soll-Drehzahlen (ω₁ₛₒₗₗ, ω₂ₛₒₗₗ) regelt, vorzugsweise, dass den Lenk-Hydromotoren (18,19) jeweils ein Drehzahlsensor (38,39) zugeordnet ist und dass die Lenkhilfssteuerung (20) die Regelung der Schwenkwinkel (S₁, S₂) auf die ermittelten Soll-Drehzahlen (ω_{1sοll}, ω₂ₛₒₗₗ) basierend auf den Sensorsignalen der Drehzahlsensoren (38,39) vornimmt.

12. Landwirtschaftliches Fahrzeug nach einem der vorhergehenden Ansprüche,
**dadurch gekennzeichnet, dass** die Lenkhilfssteuerung (20) die Schwenkwinkel (S₁,S₂) der Lenk-Hydromotoren (18,19) bei Geradeausfahrt auf einen Basisschwenkwinkel einstellt, vorzugsweise, dass sich der Basisschwenkwinkel in Abhängigkeit von der Fahrzeuggeschwindigkeit (v_{F}) ändert, insbesondere mit ansteigender Fahrzeuggeschwindigkeit (v_{F}) absinkt.

13. Landwirtschaftliches Fahrzeug nach einem der vorhergehenden Ansprüche,
**dadurch gekennzeichnet, dass** eine Radbremse (40) vorgesehen ist, die für gegenüberliegende Fahrwerksräder (3,4) betätigbar ist und dass die Lenkhilfssteuerung (20) bei einer Betätigung der Radbremse (40) für den Lenk-Hydromotor (18,19) des gebremsten Fahrwerksrads (3,4) einen Maximal-Schwenkwinkel und für den Lenk-Hydromotor (18,19) des ungebremsten Fahrwerksrads (3,4) einen Minimal-Schwenkwinkel einstellt, vorzugsweise, dass der Minimal-Schwenkwinkel ungleich null ist, weiter vorzugsweise, dass der Minimal-Schwenkwinkel der Schwenkwinkel ist, bei dem der Druckabfall über den Lenk-Hydromotor (18,19) des ungebremsten Fahrwerksrads (3,4) einen vorbestimmten Maximalwert einnimmt.

## Claims

1. An agricultural vehicle, in particular a track-laying vehicle, comprising a chassis (1) with at least two chassis wheels (3-8) which are in opposite relationship with respect to the longitudinal axis (2) of the vehicle, wherein the chassis (1) has a travel drive (9) for producing propulsion along a path (10) and a steering device (12) for setting a target curved trajectory (11) in dependence on a steering angle (γ), wherein there is provided a steering assistance device (17) for supporting the steering device (12), the steering assistance device (17) has at least two steering hydraulic motors (18, 19) and at least two chassis wheels (3, 4) which are in opposite relationship with respect to the longitudinal axis (2) of the vehicle are each drivingly coupled to a respective steering hydraulic motor (18, 19) and the steering assistance device (17) has an electric steering assistance control means (20) which from the steering angle (γ) determines target rotary speeds (ω₁ₛₒₗₗ, ω₂ₛₒₗₗ) for the steering hydraulic motors (18, 19) and regulates the steering hydraulic motors (18, 19) to the respective target rotary speeds (ω₁ₛₒₗₗ, ω₂ₛₒₗₗ), **characterised in that** the steering assistance control means (20) has a path module (25) which ascertains from the steering angle (γ) a target curved trajectory (11) to be travelled.

2. An agricultural vehicle according to claim 1 **characterised in that** the chassis (1) has a track-laying chassis (1a) with two track-laying units (24, 25) which are in opposite relationship with respect to the longitudinal axis (2) of the vehicle and associated with the track-laying units (24, 25) is a respective chassis wheel (3, 4) coupled to a steering hydraulic motor (18, 19).

3. An agricultural vehicle according to claim 1 or claim 2 **characterised in that** there is provided a steering wheel (21) with an associated steering angle sensor (22) which presets the steering angle (γ).

4. An agricultural vehicle according to one of the preceding claims **characterised in that** the steering hydraulic motors (18, 19) are in the form of axial piston machines with an adjustable pivot angle (S₁, S₂) and the steering assistance control means (20) regulates the steering hydraulic motors (18, 19) by presetting the respective pivot angle (S₁, S₂) to the target rotary speeds (ω₁ₛₒₗₗ, (ω₂ₛₒₗₗ).

5. An agricultural vehicle according to one of the preceding claims **characterised in that** the steering assistance control means (20) sets the pivot angles (S₁, S₂) of the steering hydraulic motors (18, 19) in such a way that when negotiating a target curved trajectory (11) the steering hydraulic motor (18, 19) at the inside of the curve operates as a pump and is driven by the associated inner chassis wheel (3, 4) and the steering hydraulic motor (18, 19) at the outside of the curve operates as a motor and drives the chassis wheel (3, 4) at the outside of the curve.

6. An agricultural vehicle according to one of the preceding claims **characterised in that** the steering hydraulic motors (18, 19) are connected or are connectable hydraulically in series.

7. An agricultural vehicle according to one of the preceding claims **characterised in that** the chassis (1) is in the form of a half-track chassis which besides the track-laying chassis (1a) has a wheel chassis (1b) which is steerable by the steering device (12) and which is preferably not driven and which has a wheel axle (30).

8. An agricultural vehicle according to one of the preceding claims **characterised in that** the chassis (1) is in the form of a full-track chassis which comprises the track-laying chassis (1a) or which comprises the track-laying chassis (1a) and optionally at least one further track-laying chassis (1a).

9. An agricultural vehicle according to one of the preceding claims **characterised in that** the travel drive (9) has a main drive train (31) with a main drive (32) and with two drive shafts (33, 34) which are associated with two chassis wheels (3, 4) in opposite relationship with respect to the longitudinal axis (2) of the vehicle and the steering hydraulic motors (18, 19) in addition to the main drive (32) are drivingly coupled to the drive shafts (33, 34) and preferably the main drive (32) has at least one main drive hydraulic motor (14).

10. An agricultural vehicle according to one of the preceding claims **characterised in that** the steering assistance control means (20) ascertains the target rotary speeds (ω₁ₛₒₗₗ, ω₂ₛₒₗₗ) for the steering hydraulic motors (18, 19) from the vehicle speed (v_{F}) and from the target curved trajectory (11).

11. An agricultural vehicle according to claim 10 **characterised in that** the steering assistance control means (20) regulates the pivot angles (S₁, S₂) of the steering hydraulic motors (18, 19) to the ascertained target rotary speeds (ω₁ₛₒₗₗ, (ω₂ₛₒₗₗ), and preferably a respective rotary speed sensor (38, 39) is associated with the steering hydraulic motors (18, 19) and the steering assistance control means (20) performs regulation of the pivot angles (S₁, S₂) to the ascertained target rotary speeds (ω₁ₛₒₗₗ, ω₂ₛₒₗₗ) based on the sensor signals from the rotary speed sensors (38, 39).

12. An agricultural vehicle according to one of the preceding claims **characterised in that** the steering assistance control means (20) sets the pivot angles (S₁, S₂) of the steering hydraulic motors (18, 19) when travelling straight ahead to a base pivot angle, and preferably the base pivot angle changes in dependence on the vehicle speed (v_{F}), and in particular decreases with increasing vehicle speed (v_{F}).

13. An agricultural vehicle according to one of the preceding claims **characterised in that** there is provided a wheel brake (40) which is actuable for oppositely disposed chassis wheels (3, 4) and the steering assistance control means (20) sets a maximum pivot angle upon actuation of the wheel brake (40) for the steering hydraulic motor (18, 19) of the braked chassis wheel (3, 4) and a minimum pivot angle for the steering hydraulic motor (18, 19) of the unbraked chassis wheel (3, 4), and preferably that the minimum pivot angle is not equal to zero, and further preferably the minimum pivot angle is the pivot angle at which the pressure drop across the steering hydraulic motor (18, 19) of the unbraked chassis wheel (3, 4) assumes a predetermined maximum value.

## Revendications

1. Véhicule agricole, en particulier véhicule chenillé, comprenant un train de roulement (1) avec au moins deux roues de train de roulement (3-8) disposées en vis-à-vis par rapport à l'axe longitudinal de véhicule (2), le train de roulement (1) comportant un groupe propulseur (9) pour produire une propulsion suivant une trajectoire (10) et un équipement directeur (12) pour régler une courbe de trajectoire de consigne (11) en fonction d'un angle de braquage (γ), un équipement directeur auxiliaire (17) étant prévu pour assister l'équipement directeur (12), l'équipement directeur auxiliaire (17) comportant au moins deux moteurs hydrauliques de direction (18, 19), et au moins deux roues de train de roulement (3, 4) disposées en vis-à-vis par rapport à l'axe longitudinal de véhicule (2) étant couplées en entraînement respectivement à un moteur hydraulique de direction (18, 19), et l'équipement directeur auxiliaire (17) comportant une commande électrique auxiliaire de braquage (20) qui, à partir de l'angle de braquage (γ), détermine des vitesses de rotation de consigne (ω₁ₛₒₗₗ, ω₂ₛₒₗₗ) pour les moteurs hydrauliques de direction (18, 19) et régule les moteurs hydrauliques de direction (18, 19) respectivement selon les vitesses de rotation de consigne (ω₁ₛₒₗₗ, ω₂ₛₒₗₗ), **caractérisé en ce que** la commande auxiliaire de braquage (20) comporte un module de trajectoire (35) qui, à partir de l'angle de braquage (γ), détermine une courbe de trajectoire de consigne (11) à parcourir.

2. Véhicule agricole selon la revendication 1, **caractérisé en ce que** le train de roulement (1) comporte un train de roulement chenillé (1a) avec deux ensembles de chenilles (24, 25) disposés en vis-à-vis par rapport à l'axe longitudinal de véhicule (2), et **en ce qu'**aux ensembles de chenilles (24, 25) est respectivement associée une roue de train de roulement (3, 4) couplée à un moteur hydraulique de direction (18, 19).

3. Véhicule agricole selon la revendication 1 ou 2, **caractérisé en ce qu'**une roue directrice (21) est prévue avec un transmetteur d'angle de braquage (22) qui prescrit l'angle de braquage (γ).

4. Véhicule agricole selon une des revendications précédentes, **caractérisé en ce que** les moteurs hydrauliques de direction (18, 19) sont conformés en machines à piston axial à angle de pivotement réglable (S₁, S₂), et **en ce que** la commande auxiliaire de braquage (20) régule les moteurs hydrauliques de direction (18, 19) en prescrivant l'angle de pivotement respectif (S₁, S₂) en fonction des vitesses de rotation de consigne (ω₁ₛₒₗₗ, ω₂ₛₒₗₗ).

5. Véhicule agricole selon une des revendications précédentes, **caractérisé en ce que** la commande auxiliaire de braquage (20) règle l'angle de pivotement (S₁, S₂) des moteurs hydrauliques de direction (18, 19) de façon que, au passage d'une courbe de trajectoire de consigne (11), le moteur hydraulique de direction intérieur à la courbe (18, 19) fonctionne comme une pompe et soit entraîné par la roue de train de roulement intérieure associée (3, 4) et que le moteur hydraulique de direction extérieur à la courbe (18, 19) fonctionne comme un moteur et entraîne la roue de train de roulement extérieure à la courbe (3, 4).

6. Véhicule agricole selon une des revendications précédentes, **caractérisé en ce que** les moteurs hydrauliques de direction (18, 19) sont montés en série ou commutables de manière hydraulique.

7. Véhicule agricole selon une des revendications précédentes, **caractérisé en ce que** le train de roulement (1) est conformé en train de roulement semi-chenillé qui, à côté du train de roulement chenillé (1a), comporte un train de roulement à roues dirigeable par l'intermédiaire de l'équipement directeur (12), de préférence non entraîné, (1b) avec un essieu (30).

8. Véhicule agricole selon une des revendications précédentes, **caractérisé en ce que** le train de roulement (1) est conformé en train de roulement tout chenillé qui est constitué du train de roulement chenillé (1a) ou qui est constitué du train de roulement chenillé (1a) et, le cas échéant, au moins d'un autre train de roulement chenillé (1a).

9. Véhicule agricole selon une des revendications précédentes, **caractérisé en ce que** le groupe propulseur (9) comporte une chaîne de transmission principale (31) avec un moyen d'entraînement principal (32) et avec deux arbres d'entraînement (33, 34) qui sont associés à des roues de train de roulement (3, 4) disposées en vis-à-vis par rapport à l'axe longitudinal de véhicule (2), et **en ce que**, en plus du moyen d'entraînement principal (32), les moteurs hydrauliques de direction (18, 19) sont couplés en entraînement aux arbres d'entraînement (33, 34), de préférence **en ce que** le moyen d'entraînement principal (32) comporte au moins un moteur hydraulique de moyen d'entraînement principal (14) .

10. Véhicule agricole selon une des revendications précédentes, **caractérisé en ce que**, à partir de la vitesse de véhicule (V_{F}) et à partir de la courbe de trajectoire de consigne (11), la commande auxiliaire de braquage (20) détermine les vitesses de rotation de consigne (ω₁ₛₒₗₗ, ω₂ₛₒₗₗ) pour les moteurs hydrauliques de direction (18, 19).

11. Véhicule agricole selon la revendication 10, **caractérisé en ce que** la commande auxiliaire de braquage (20) régule l'angle de pivotement (S₁, S₂) des moteurs hydrauliques de direction (18, 19) selon les vitesses de rotation de consigne déterminées (ω₁ₛₒₗₗ, ω₂ₛₒₗₗ), de préférence **en ce qu'**aux moteurs hydrauliques de direction (18, 19) est associé respectivement un capteur de vitesse de rotation (38, 39), et **en ce que** la commande auxiliaire de braquage (20) effectue la régulation de l'angle de pivotement (S₁, S₂) selon les vitesses de rotation de consigne déterminées (ω₁ₛₒₗₗ, ω₂ₛₒₗₗ) sur la base des signaux de capteurs des capteurs de vitesse de rotation (38, 39) .

12. Véhicule agricole selon une des revendications précédentes, **caractérisé en ce que**, en ligne droite, la commande auxiliaire de braquage (20) règle l'angle de pivotement (S₁, S₂) des moteurs hydrauliques de direction (18, 19) selon un angle de pivotement de base, de préférence **en ce que** l'angle de pivotement de base varie en fonction de la vitesse de véhicule (V_{F}), en particulier diminue à mesure que la vitesse de véhicule (V_{F}) augmente.

13. Véhicule agricole selon une des revendications précédentes, **caractérisé en ce qu'**il est prévu un frein de roue (40) qui est actionnable pour des roues de train de roulement en vis-à-vis (3, 4), et **en ce que**, en cas d'actionnement du frein de roue (40), la commande auxiliaire de braquage (20) règle, pour le moteur hydraulique de direction (18, 19) de la roue de train de roulement freinée (3, 4), un angle de pivotement maximal et, pour le moteur hydraulique de direction (18, 19) de la roue de train de roulement non freinée (3, 4), un angle de pivotement minimal, de préférence **en ce que** l'angle de pivotement minimal est différent de zéro, plus préférablement **en ce que** l'angle de pivotement minimal est l'angle de pivotement auquel la baisse de pression due au moteur hydraulique de direction (18, 19) de la roue de train de roulement non freinée (3, 4) adopte une valeur maximale prédéterminée.
